# DEMANDE DE BREVET EUROPEEN

(11) **EP 0 678 433 A1**
(43) Date de publication de la demande: **25.10.1995**
(21) Numéro de dépôt: 95410033.5
(22) Date de dépôt: 13.04.1995
(51) Int. Cl.: B61B 13/12, B61B 9/00, B61C 17/06

(54) **Installation de transport à cable tracteur et à moteur embarqué**

(30) Priorité: 22.04.1994 FR 9405121
(71) Demandeur: POMAGALSKI S.A., F-38600 Fontaine (FR)
(72) Inventeur: Cathiard, Jean-Pierre, F-38123 Noyarey (FR)
(74) Mandataire: Kern, Paul

(57) **Abrégé**

Sur les sections de croisière de l'installation, les véhicules 14 sont accouplés à un câble tracteur 17, qui défile en continu à la vitesse de croisière. Un moteur électrique 23 et un accumulateur électrique 25 sont embarqués sur le véhicule 14 pour déplacer et accélérer le véhicule sur une section d'accélération avant son accouplement au câble tracteur. La recharge de l'accumulateur intervient périodiquement à l'arrêt en station, de façon à limiter la capacité de l'accumulateur.

## Description

L'invention est relative à une installation de transport de passagers à véhicules circulant sur une voie, subdivisée, entre deux stations, en une section d'accélération, une section de croisière, une section de décélération et une section d'arrêt dans les stations pour l'embarquement et le débarquement des passagers, dans laquelle installation la section de croisière est équipée d'un câble tracteur, entraîné en continu à la vitesse de croisière et dans laquelle chaque véhicule comprend; une pince débrayable d'accouplement du véhicule audit câble pendant le parcours de la section de croisière, un moteur électrique embarqué pour propulser le véhicule lorsqu'il est désaccouplé du câble et un capteur d'énergie électrique.

L'entraînement par câble de véhicules circulant sur une voie, qui peut être terrestre ou aérienne, présente de nombreux avantages, notamment de simplicité et de fiabilité. Le maniement des véhicules désaccouplés du câble, notamment leur freinage à l'entrée d'une station et leur réaccélération à la sortie, est par contre plus délicat et nécessite des chaînes ou des câbles auxiliaires d'entraînement ou des trains de roues de friction, ainsi que des systèmes de synchronisation.

Le document CH-A-329 610 concerne une installation, dans laquelle la voie principale, en circuit fermé, est équipée d'une chaîne de traction des véhicules circulant sur cette voie. Des stations sont échelonnées le long de la voie principale et sont reliées à cette dernière par des voies dérivées et des aiguillages. Chaque véhicule comprend une pince d'accouplement du véhicule au câble tracteur, pour le parcours sur la voie principale, un moteur électrique embarqué, pour la propulsion du véhicule sur les voies dérivées et un capteur de courant électrique, qui coopère avec des rails d'alimentation électriques, disposés le long des voies dérivées. La simplicité résultant de la traction par câble est largement compromise par le système de captage de courant sur les voies dérivées. Le freinage des véhicules intervient obligatoirement sur les voies dérivées, après l'aiguillage, lequel est parcouru à la vitesse de croisière définie par la vitesse du câble tracteur.

La présente invention a pour but de simplifier une installation du genre mentionné.

L'installation de transport selon l'invention est caractérisée en ce que le véhicule comprend un accumulateur d'énergie électrique pour alimenter ledit moteur et que la station comporte une borne d'alimentation électrique coopérant avec le capteur, lorsque le véhicule est dans la station, la capacité de l'accumulateur étant adaptée à l'énergie nécessaire à l'accélération du véhicule à la sortie de la station pour le réaccouplement du véhicule au câble.

L'installation conserve les avantages de la traction par câble sur les sections de croisière, qui sont les plus longues et demandent le plus d'énergie et présente les avantages de la propulsion autonome de chaque véhicule sur les autres sections ou sur des voies de transfert ou de stockage des véhicules. Le moteur embarqué ne fonctionne que pendant de courtes périodes et il peut être de faible puissance, ainsi que l'accumulateur, qui est périodiquement rechargé, après chaque utilisation, par les bornes d'alimentation disposées dans les stations. La capacité de l'accumulateur correspond avantageusement à l'énergie nécessaire à une seule accélération du véhicule, bien entendu avec une marge suffisante de sécurité. Le captage de courant est réalisé à l'arrêt ou à déplacement très lent permettant l'embarquement et/ou le débarquement des passagers, par exemple par des balais coopérant avec des plots ou des rails d'alimentation électrique de courte longueur.

Selon un développement de l'invention le moteur électrique contribue au freinage du véhicule sur la section de décélération, en fonctionnant en génératrice. Le courant électrique produit est utilisé pour la recharge partielle de l'accumulateur, laquelle est complétée à l'arrêt du véhicule, pour disposer d'une énergie emmagasinée suffisante pour déplacer et accélérer le véhicule avant son réaccouplement au câble tracteur.

Les progrès réalisés dans la miniaturisation des moteurs et des accumulateurs électriques, ainsi que dans la rapidité de recharge de ces derniers, rendent la solution de propulsion auxiliaire par un moteur électrique embarqué particulièrement attrayante, la durée de recharge étant inférieure au temps de stationnement du véhicule en station, nécessaire à l'embarquement et au débarquement des passagers. Le fonctionnement du moteur électrique est piloté par une unité de commande embarquée, qui pilote également l'ouverture et la fermeture de la pince, pour le désaccouplement et l'accouplement du véhicule au câble tracteur, respectivement à la fin et au début de la section de croisière. Cette unité peut assurer d'autres fonctions, par exemple la commande d'ouverture et de fermeture des portes et l'accumulateur constitue une source d'énergie, utilisable, par exemple, pour l'éclairage du véhicule. L'embarquement d'un système auxiliaire de propulsion selon l'invention n'augmente que faiblement le poids du véhicule et simplifie notablement l'infrastructure de l'installation.

D'autres avantages et caractéristiques ressortiront plus clairement de la description qui va suivre d'un mode de mise en oeuvre de l'invention donné à titre d'exemple et représenté aux dessins annexés, dans lesquels:
la figure 1 est une vue schématique en plan d'une installation selon l'invention;
la figure 2 représente la courbe de vitesse du véhicule selon la figure 1;

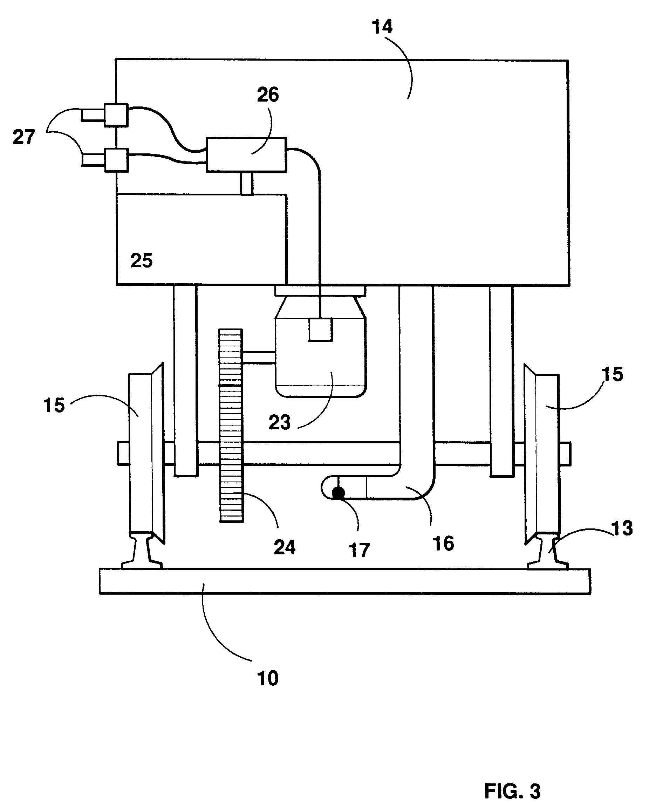

la figure 3 est une coupe selon la ligne 3-3 de la figure 1.

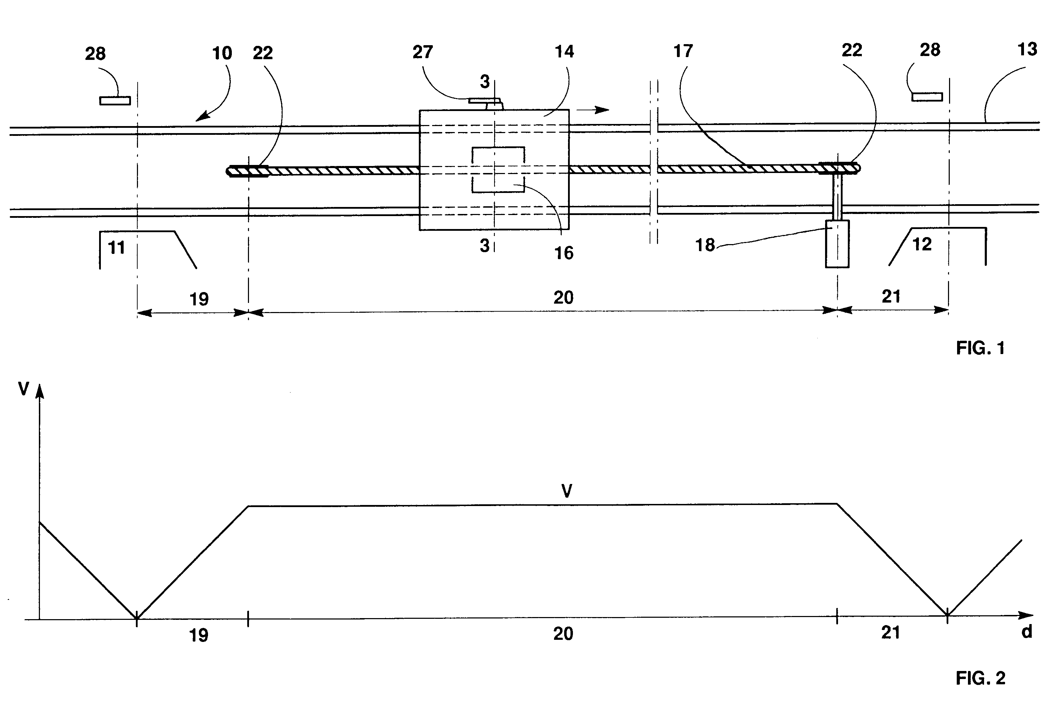

Sur les figures une voie 10, notamment en site propre, dont seul un tronçon reliant deux stations 11,12 est représenté sur la figure 1, est constitué de deux rails 13 de chemin de fer.

La voie peut être une piste de roulement avec des pistes de guidage ou être constituée par un ou plusieurs câbles porteurs. Les véhicules 14, circulant sur la voie 10, ont des roues à boudin 15 et une pince débrayable 16, fixée à la base du véhicule et susceptible d'enserrer un câble tracteur 17. Ce câble est entraîné en continu à une vitesse de croisière V par un moteur 18. Le tronçon de la voie 10, délimité par les deux stations 11,12, est subdivisé en trois sections, en l'occurrence une section d'accélération 19 du véhicule 14, une section de croisière 20 et une section de décélération 21. Dans l'exemple illustré par les figures les véhicules s'arrêtent dans les stations 11,12 pour l'embarquement et le débarquement des passagers, mais il est clair que les véhicules peuvent se déplacer à faible vitesse dans les stations d'une manière bien connue des spécialistes. A la sortie de la station 11, les véhicules 14 sont accélérés sur la section de voie 19, pour atteindre la vitesse de croisière V et se déplacer à cette vitesse sur la section de croisière 20, avant d'être décélérés à l'entrée de la station suivante 12 où ils s'arrêtent.

Le câble tracteur 17, en forme de boucle sans fin passant sur deux poulies d'extrémité 22, s'étend le long de la section de croisière 20 et à l'arrivée d'un véhicule sur la section de croisière 20, la fermeture de la pince 16 est commandée par tout moyen approprié, pour accoupler le véhicule au câble tracteur 17. D'une manière analogue la pince 17 est ouverte, de préférence automatiquement, en fin de la section de croisière 20 pour désaccoupler le véhicule 14 du câble 17.

Selon l'invention le véhicule 14 est équipé d'un moyen autonome de propulsion, constitué d'un moteur électrique 23, qui entraîne en rotation les roues 15, par l'intermédiaire d'un réducteur 24. Le moteur 23 est alimenté par un accumulateur 25, embarqué sur le véhicule 14, avec interposition d'une unité de régulation et de commande 26. L'accumulateur 25 est d'autre part relié à des balais d'alimentation 27, fixés à la paroi latérale du véhicule 14. Les balais 27 coopèrent dans les stations 11,12 avec des plots 28 ou rails, qui constituent une borne d'alimentation électrique, pour capter le courant de charge de l'accumulateur 25 pendant l'arrêt ou le déplacement à faible vitesse du véhicule 14.

L'installation fonctionne de la manière suivante: Un véhicule 14 à l'arrêt dans la station 11 est alimenté en courant par les plots 28 pour charger l'accumulateur 25. Le départ est commandé par l'unité de régulation 26, qui alimente le moteur électrique 23 par l'accumulateur 25. Le moteur fait tourner les roues 15 pour déplacer le véhicule 14 sur la section d'accélération 19 et l'unité de régulation 26 pilote l'accélération de façon à atteindre la vitesse V de défilement du câble tracteur 17 en fin de la section d'accélération 19. Dès l'entrée du véhicule sur la section de croisière 20, la pince 16 est fermée et le véhicule est entraîné par le câble 17 à la vitesse V. L'alimentation électrique du moteur 23 est par contre interrompue. En fin de la section de croisière 20 la pince 16 est ouverte pour désaccoupler le véhicule du câble 17 et permettre son freinage sur la section de décélération 21 et son arrêt dans la station 12, où les balais 27 viennent au contact des plots 28 pour la recharge de l'accumulateur 25. L'accumulateur 25 est ainsi rechargé périodiquement à chaque arrêt et sa capacité est limitée à l'énergie nécessaire à une accélération du véhicule, bien entendu avec une marge de sécurité. Son poids ainsi que celui du moteur 23, qui ne travaille que des courtes périodes, sont donc réduits. De même la durée de recharge est réduite et inférieure au temps d'embarquement et de débarquement des passagers.

Selon un développement de l'invention, le moteur 23 peut fonctionner en génératrice pour freiner le véhicule 14, pendant le parcours sur la section de décélération 21 et pour alimenter l'accumulateur 25. L'énergie de freinage est ainsi récupérée et stockée dans l'accumulateur 25 pour être utilisée lors de l'accélération du véhicule après son arrêt en station. L'ensemble est piloté par l'unité de régulation et de commande 26 et les pertes sont bien entendu compensées par la recharge additionnelle de l'accumulateur 25 en station.

L'unité de régulation et de commande 26 pilote d'autres systèmes de contrôle et de sécurité, notamment l'ouverture et la fermeture de la pince et des portes du véhicule.

## Revendications

1. Installation de transport de passagers à véhicules (14) circulant sur une voie (10), subdivisée, entre deux stations (11,12), en une section d'accélération (19), une section de croisière (20), une section de décélération (21) et une section d'arrêt dans les stations pour l'embarquement et le débarquement des passagers, dans laquelle installation la section de croisière (20) est équipée d'un câble tracteur (17), entraîné en continu à la vitesse de croisière (V) et dans laquelle chaque véhicule (14) comprend; une pince débrayable (16) d'accouplement du véhicule audit câble (17) pendant le parcours de la section de croisière (20), un moteur électrique (18) embarqué pour propulser le véhicule (14) lorsqu'il est désaccouplé du câble (17) et un capteur (27) d'énergie électrique, caractérisée en ce que le véhicule (14) comprend un accumulateur d'énergie électrique (25) pour alimenter ledit moteur (18) et que la station (11,12) comporte une borne (28) d'alimentation électrique coopérant avec le capteur (27), lorsque le véhicule (14) est dans la station, la capacité de l'accumulateur (25) étant adaptée à l'énergie nécessaire à l'accélération du véhicule (14) à la sortie de la station (11,12) pour le réaccouplement du véhicule au câble (17).

2. Installation selon la revendication 1, caractérisée en ce que le moteur électrique (18) est agencé pour fonctionner en génératrice pour charger l'accumulateur (25).

3. Installation selon la revendication 2, caractérisée en ce qu'elle comprend une unité (26) de régulation et de commande du moteur (18), embarquée sur le véhicule (14) pour faire fonctionner le moteur en génératrice pendant le parcours de la section de décélération (21) et en moteur sur la section d'accélération (19).

4. Installation selon la revendication 3, caractérisée en ce que ladite unité (26) de régulation et de contrôle pilote l'ouverture et la fermeture de la pince (16).
